# EUROPEAN PATENT SPECIFICATION

(11) **EP 4 321 391 B1**
(45) Date of publication and mention of the grant of the patent: **06.05.2026**
(21) Application number: 22382780.9
(22) Date of filing: 11.08.2022
(51) Int. Cl.: B60R 16/023

(54) **JUNCTION BOX**
ANSCHLUSSDOSE
BOÎTIER DE RACCORDEMENT

(43) Date of publication of application: 14.02.2024
(60) Divisional application: 26166951.9
(73) Proprietor: Fico Triad, S.A., 08028 Barcelona (ES)
(72) Inventor: PLANAS GIRONA, Albert, Viladecavalls (Barcelona) (ES); ROVIRA MASIP, Guillem, Viladecavalls (Barcelona) (ES); PRAT TERRADES, Jaume, Viladecavalls (Barcelona) (ES)
(74) Representative: Bardehle Pagenberg S.L.

(56) References cited:
- EP-A1- 3 594 984
- WO-A1-2019/017593
- DE-A1- 102015 113 374
- JP-A- 2002 084 629
- JP-A- 2014 230 328
- US-A- 5 478 244
- US-A- 5 934 934
- US-A1- 2019 259 992
- US-B2- 7 724 531

## Description

### TECHNICAL FIELD

The present disclosure relates to junction boxes for electrical or hybrid vehicles, and to methods for manufacturing such junction boxes.

### BACKGROUND

The battery of an electric or hybrid vehicle can function as an energy storage element for powering an electrical motor and thus enabling the vehicle to move. The battery may be part of the floor structure of the vehicle. A battery may include several cells, e.g. lithium-ion cells grouped into modules.

In order to drive the vehicle, the battery may be connected to one or more electrical motors. The electrical motor or "traction motor" may drive a wheel axle. For example, a front wheel axle may be driven by a front traction motor, and a rear wheel axle may be driven by a rear traction motor. It is also possible for a single traction motor to drive a single axle.

The term "traction motor" is herein used to refer to the motors that are used for the propulsion of the vehicle, and to distinguish these motors from other electrical motors used for auxiliary systems on the vehicle, e.g. for air conditioning, window control, mirror adjustment, etc. Throughout the present disclosure, the term motor may generally be understood to refer to traction motors.

The term "battery" within the present disclosure may be understood to refer to the battery or battery pack used for propulsion.

The power delivered by the battery is DC power, whereas the electrical traction motors operate with AC power. A power inverter may be used to convert DC current from the battery to AC current for the motors. If a front and a rear motor are provided, each may be connected to its corresponding inverter, i.e. both a front inverter and a rear inverter may be provided.

An electrical junction box is an enclosure housing electrical connections. Junction boxes generally serve the purpose of protecting these electrical connections. A junction box in a vehicle may e.g. be provided to electrically connect the electrodes of the battery (positive and negative or "cathode" and "anode") to the inverter(s) and/or to other electrical components or circuits. Such a junction box may generally comprise a housing with a plurality of busbars to conduct current. In the junction box, other electrical components such as fuses, different types of relays, and common mode filters may also be provided. The connections inside the junction box can selectively distribute power from the battery to other electrical systems, such as the aforementioned inverters.

The positions of the electrical connections to the outside of the junction box may be determined by the vehicle design or vehicle manufacturer. Arranging the busbars within a junction box to make the necessary electrical connections in a safe, insulated, manner and providing thermal heat dissipation thus can become complicated.

Junction boxes are well known in the art. JP2002084629A discloses a junction box including a circuit substrate in which a busbar is molded. Many known junction boxes however suffer from excessive heating. The busbars heat up significantly in use as a high level of current is provided through them and it is a significant engineering challenge to provide for sufficient heat dissipation of these busbars. It is known to provide a heat sink or cooling system at the outside of the housing of the junction box to reduce the temperatures.

The cooling of the busbars is however not necessarily very effective, and thus a relatively large amount of energy is needed to keep the temperature of the busbars under control.

In examples of the present disclosure, at least some of the aforementioned problems are resolved or at least reduced.

### SUMMARY

In an aspect of the disclosure, a junction box for a vehicle according to claim 1 is provided. The junction box comprises: a plurality of busbars, and a housing to substantially enclose the plurality of busbars. The housing comprises a base, a cover, and one or more sidewalls connecting the base with the cover. The base is made of an electrically insulating material, and comprises an inner side facing an inside of the junction box, and an outer side facing an outside of the junction box. A portion of at least one of the plurality of busbars is embedded within the base.

According to this first aspect, heating of one or more of the busbars can be avoided or reduced since at least a portion of a busbar is embedded in the base of the junction box. Thermal dissipation can take place through direct conductive contact between the busbar and the base, rather than through convection. At the same time, the portions of the busbars are electrically insulated by being embedded in a suitable material, such as a resin or a polymer, e.g. a thermoplastic polymer.

In examples, the base may be made by injection molding. The portions of the busbars to be embedded in the base may be arranged in a mold, and subsequently injection may take place to form the base around the portions of the busbars.

The base includes one or more grooves at the outer side. A groove may herein be regarded as a relatively narrow cut, slit or recess at the outer side. I.e. the outer side at the groove is raised with respect to neighboring portions of the base. The grooves may be provided for a variety of reasons, e.g. for fitting a reinforcing structure, for fitting a part of a cooling system or to adapt the outer shape of the base to another neighboring component.

A portion of at least one of the busbars that is embedded within the base extends over one of the grooves. In accordance herewith, thermal dissipation may be effective even if the shape of the base is irregular.

In some examples, the base substantially extends along a base plane, and the portion of the busbar extending over one or more of the grooves comprises a first segment extending substantially parallel to the base plane on a first side of the groove, a second segment extending substantially parallel to the base plane on a second side of the groove and one or more further segments between the first and second segments which are not parallel to the base plane. Such an arrangement allows effective electrical insulation and thermal dissipation while providing sufficient strength and stiffness to the junction box. The busbar, or large portions thereof can be embedded and thereby improve thermal dissipation through thermal conduction, and the portions of the busbar may be arranged relatively close to an outer side of the base.

In some examples, the outer side may be configured to be cooled. The outer side of the base may include or may be in contact with a cold source or any suitable cooling means. The cold source may be air surrounding the junction box or other. The outer face of the base may include materials that promote thermal dissipation, e.g. a support frame may be metallic and promote thermal dissipation.

In some examples, a thickness of the base between the outer side and the portion of the busbars embedded within the base may be at least 1 mm, and specifically between 1 and 2.5 mm. In order to ensure or improve mechanical strength and/or electrical insulation, sufficient electrically insulating material of the base may be provided around the busbars. At the same time, the closer the busbars can be arranged to the outer side, the more effective cooling of the busbars can be.

In some examples, at least one of the further segments is arranged at or near the groove. The further segments may comprise straight portions (inclined at an angle with respect to the base plane) or curved portions.

The junction box further comprises a support frame to support the base. The injection molded base (and sidewalls) may not be stiff and strong enough for a junction box with a significant length and/or weight. The length of the junction box may be e.g. 50 cm or more, specifically 70 cm or more, more specifically about 1 meter long. A support frame can add stiffness and strength to a junction box when needed.

The support frame may comprise a perimetral flange surrounding at least a part of a perimeter of the base, and in examples may also comprise one or more transverse braces connecting parts of the perimetral flange on opposite sides of the base and arranged in grooves of the base. In order to provide sufficient stiffness to the junction box, one or more braces may be provided at different longitudinal position.

In examples, one or more of the braces of the support frame may be arranged in the aforementioned grooves in the base.

In some examples, the junction box may further comprise a filter. One or more of the busbars in the junction box may be connected to an inverter, e.g. a rear inverter for controlling the rear traction motor, or a front inverter for controlling a front traction motor of the vehicle. The inverters may use high frequency Pulse Width Modulation (PWM) for controlling the torque and speed of the traction motors. High frequency PWM is known to cause common mode currents. A filter may be arranged in the junction box to reduce or avoid the effects of such common mode currents. E.g. passive electromagnetic interference filters such as a ferrite core (also called ferrite "ring", ferrite "bead" or ferrite "choke") may be used, and the ferrite core may be arranged around one or more of the busbars. The ferrite core may be a one-piece ferrite core.

Arranging a ferrite core around one or more busbars needs to be taken into account during manufacture and/or assembly of the junction box. Such busbars cannot be completely embedded in the base of the junction box. For manufacturing purposes, it may be beneficial to mount such busbars after injection molding and embedding other busbars. I.e. such busbars may be completely unembedded.

In some examples, the junction box may electrically connect the main battery of the vehicle with other electrical components. The junction box may include a main busbar group for electrically connecting to electrodes of a main battery of the vehicle.

In some examples, the main busbar group comprises a first main busbar connected to a first electrode of the main battery of the vehicle, a second main busbar connected to a second electrode of the main battery of the vehicles, and wherein the main busbar group is connected to a fuse and/or a relay.

In some examples, the junction box may further comprise a rear drive busbar group for connecting to a rear inverter for driving a rear motor of the vehicle and/or a front drive busbar group for connecting to a front inverter for driving a front motor of the vehicle. The inverters and traction motors may thus be connected to a battery of the vehicle through the junction box. In some examples, yet further busbars connecting to a further auxiliary component or auxiliary electrical circuit may be included in the junction box.

In some examples, the first and/or the second main busbar is at least partially embedded in the base, whereas the rear drive busbar group and/or the front drive busbar group are not embedded in the base. In some examples, the rear drive busbar group and/or the front drive busbar group are electrically connected to the fuse and/or relay that are electrically connected to the main busbar group.

In some examples, the rear drive busbar group and/or the front drive busbar group comprise two substantially parallel busbar portion which are not embedded in the base, and wherein a ferrite core is arranged around the two substantially parallel busbar portions. In these examples, the rear drive busbar group and/or the front drive busbar group may be mounted on the base after injection molding of the base.

In some examples, the base is made from one or more of polybutylene (PBT), polyamide (PA), polyester, polyketone, a liquid crystal polymer, polyolefin, polyphenylene sulfide (PPS), polyether ether ketone (PEEK), polyphenylene oxide (PPO), polyethersulfone (PES), polyetherimide (PEI), and polyimide or a mixture or copolymer of one or more of these.

In some examples, the material of the base may comprise one or more heat dissipation fillers, and optionally wherein the heat dissipation fillers are selected from the group of: magnesium oxide, titanium dioxide, aluminum nitride, silicon nitride, boron nitride, aluminum oxide, silica, zinc oxide, barium titanate, strontium titanate, beryllium oxide, silicon carbide, and manganese oxide. A heat dissipation filler may herein be regarded as an additive to the resin or plastic of the base that increases thermal conductivity of the material of the base in which one or more busbars are at least partially embedded.

In a further aspect of the present disclosure, a system according to claim 11 is provided. The system comprises the junction box according to any of the examples disclosed herein, and a cooling system comprising a cooling surface. The cooling surface is attached to the outer side of the junction box. The outer side of the junction box may be the outer side of the base or in examples wherein the junction box comprises a support frame, the outer side may refer to the outer side of the support frame.

In yet a further aspect, a battery pack including a plurality of battery cells is provided. The battery pack includes a junction box according to any of the examples described herein and a cooling system for cooling the junction box.

In examples, the cooling system may be configured for cooling a base of the junction box, and specifically an outer side of the base of the junction box. In examples, the cooling system may further be configured for cooling of the battery cells.

In yet a further aspect, the present disclosure provides a vehicle including such a battery pack.

In yet a further aspect, a method for manufacturing a junction box for a vehicle according to claim 12 is provided. The method comprises positioning a first group of busbars in a mold, and injection molding of a base of the junction box, such that at least a portion of each of the busbars of the first group is embedded in the base. The method further comprises providing a second busbar, arranging a ferrite core around the second busbar and mounting the second busbar with the ferrite core to the base.

According to this aspect, a cost-effective method is provided for the manufacture and assembly of a junction box. Effective thermal dissipation of at least some of the busbars can be provided by embedding them in a resin or plastic of the base. At the same time, a relatively easy and cheap way to arrange a filter in the same junction box is provided. I.e. the busbars that are to be surrounded by a ferrite core are not embedded, but rather are mounted after the injection molding. The use of more complicated and more expensive ferrites or filters can thus be avoided.

In some examples, all busbars which do not have ferrite cores (or similar) or other electrical components around them may be partially embedded.

The method furthermore comprises joining a support frame to the base of the junction box. Joining includes fitting part of the support frame in grooves in the base. The support frame may comprise a peripheral flange, and a portion the base of the junction box may be received with the peripheral flange. Joining may further include adhesively attaching the support frame of the junction box.

In some examples, a cooling surface of a cooling system may be joined to the support frame, e.g. through welding.

Electrically insulating materials as used throughout the present disclosure may be understood to refer to materials in which electric current does not flow freely. Electrical insulators have a high electrical resistivity. Rubbers, glass and plastics are typical examples of electrical insulators. "Electrically insulating" may herein be regarded as a material property of having an electrical resistivity of 10⁹ Ω.m or higher at room temperature (20°C).

### BRIEF DESCRIPTION OF THE DRAWINGS

Non-limiting examples of the present disclosure will be described in the following, with reference to the appended figures, in which:
Figures 1A schematically illustrates an electrical circuit of a junction box according to an example;
Figures 1B - 1D schematically illustrate different perspective views of the junction box according to the example;
Figure 1E schematically illustrates the arrangement of the busbars of the junction box according to the example;
Figure 1F shows a bottom view of the junction box according to the example; and
Figures 2A and 2B schematically illustrate examples of details of a base of a junction box according to an example.

The figures refer to example implementations and are only be used as an aid for understanding the claimed subject matter, not for limiting it in any sense.

### DETAILED DESCRIPTION OF EXAMPLES

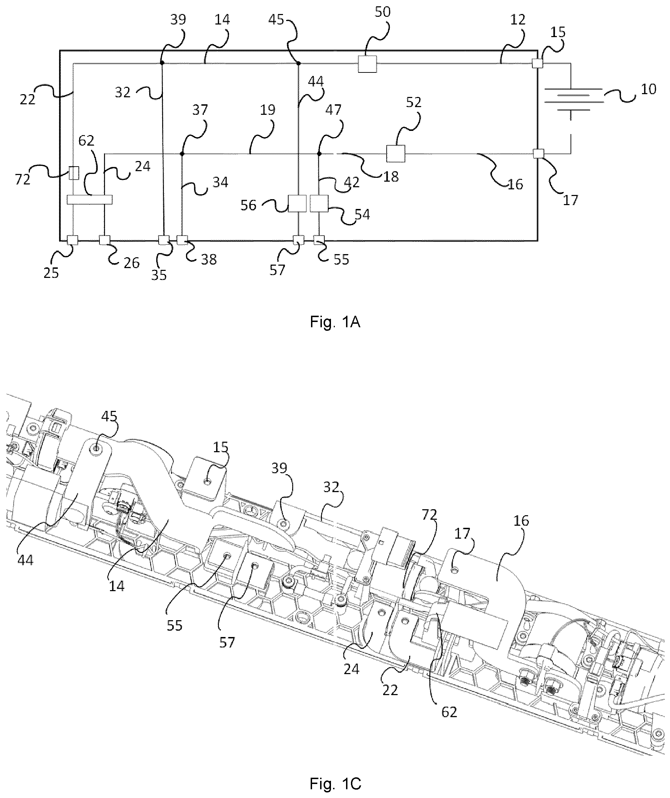

Figures 1A schematically illustrates an electrical circuit of a junction box according to an example. Generally, such a junction box may be installed in a trunk or a cabin room or integrated in the battery pack of a vehicle in order to be connected to the high-voltage battery or "main battery".

The junction box according to this example includes a main busbar group for electrically connecting to electrodes of a main battery 10 of the vehicle. The main busbar group comprises a first main busbar 12 connected to a first electrode of the main battery of the vehicle at a first electrical connection 15, a second main busbar 16 connected to a second electrode of the main battery of the vehicles at a second electrical connection point 17.

The main busbar group may be connected to a fuse and/or a relay. In this example, a first relay 50 is connected to the first main busbar 12. A third main busbar 14 is connected at the other side of the first relay 50. A second relay 52 may be connected to second busbar 16. A fourth busbar 19 is connected to relay 52 as well.

In parallel to first or "main" relay 50, a pre-charge relay and resistor may be arranged in the main busbar group. The junction box in examples may include a main relay, a pre-charge relay, a pre-charge resistor, and the like, and the above-described components are electrically connected to each other through a (plurality of) busbars. A main relay is configured to supply or block the power between the high-voltage main battery and the motor, and a pre-charge relay and the pre-charge resistor are configured to reduce in-rush currents.

The busbars of the main busbar group may be configured to conduct higher levels of current than the other busbars. The busbars may be made of copper, brass or aluminum. The busbars configured for higher levels of current may have a larger cross-section than other busbars. In an example, the busbars of the main busbar group may have a cross-section of between 150 and 200 mm², e.g. around 180 mm².

The junction box may further comprise a rear drive busbar group for connecting to a rear inverter for driving a rear motor of the vehicle. In the example, the rear drive busbar group comprises a first busbar 32 connected at electrical junction 39 to busbar 14 of the main busbar group. The rear drive busbar group further comprises a second busbar 34 connected at electrical junction 37 to the busbar 19 of the main busbar group.

The busbars 32, 34 of the rear drive busbar group are connected at electrical connection points 35, 38 respectively to further conductors. The further conductors outside the junction box can lead to a rear inverter configured for driving the rear traction motor of a vehicle.

The junction box according to the example further comprises a front drive busbar group for connecting to a front inverter for driving a front motor of the vehicle. The front drive busbar group in this example comprises a first busbar 22 connected at electrical junction 39 to the main busbar group. The front drive busbar group in this example further comprises a second busbar 24 connected to electrical junction 37 to the main busbar group. The first busbar 22 may connect at 25 to further conductors leading to a front inverter. Similarly, second busbar 24 of the front drive busbar group may be connected to further conductors at 26 leading to the front inverter.

In the schematic illustration, a single electrical junction 39 is shown to connect the main busbar group, the front drive busbar group and the rear drive busbar group. Similarly, a single electrical junction 37 is shown to do the same for the other part of the electrical circuit. It should be clear that in practice, different electrical elements such as relays may be connected at such an electrical junction.

The electrical connection between the different busbars at such an electrical junction may be provided though an electrically conductive fastener. I.e. the busbars are connected to each other through a fastener, e.g. a screw. This fastener at the same is configured to conduct the current from one busbar to another.

In this example, the front drive busbar group comprises two substantially parallel busbar portions, and a ferrite ring 62 is arranged around the two substantially parallel busbar portions. The ferrite ring 62 is provided to reduce common mode currents in the busbars due to high frequency PWM of the front inverter. In the depicted example, no ferrite ring (or other filter) is provided in the rear drive busbar group. Such a ferrite ring may be provided outside of the junction box in this example. It should be clear that in other examples, ferrite rings may be provided e.g. both for the front drive busbar group and the rear drive busbar group, or only for the rear drive busbar group, or no such ferrite ring is included in the junction box.

The filter in this example is shown as a ferrite ring. In other examples however, the ferrite core may be shaped as rectangular, square, polygonal or in any other suitable form. In this example, the ferrite core forms a closed ring. However, the ferrite core may also form a non-closed ring or a ring composed of a plurality of partial sectors (e.g. two half-toroids).

The operation of inverters for driving traction motors is known in the art. An inverter serves the same kind of function in a hybrid or EV car. DC power may be fed to a primary winding in a transformer within the inverter housing. Through a set of electronic switches (e.g. IGBT's, MOSFET's) and a process of Pulse Width Modulation (PWM), the direction of the flow of current is continuously reversed according to a precisely determined program. The in/outflow of electricity produces AC current in the transformer's secondary winding circuit. Ultimately, this induced alternating current electricity provides power for an electric traction motor.

Within an electric drivetrain, the inverter controls the electric motor. This is a key component in the car as, similar to the Engine Management System (EMS) of combustion vehicles, it determines driving behavior. Regardless of whether the motor is synchronous, asynchronous or brushless DC, the inverter generally functions in a similar way and is controlled by an integrated PCB, which is generally designed to minimize switching losses and maximize thermal efficiency.

The inverters may not only drive and control the electric traction motors, they may also capture energy released through regenerative breaking and provide this power to the main battery. As a result, the range of the vehicle is directly related to the efficiency of the traction inverter.

In the depicted example, the junction box may comprise a further auxiliary busbar group for connecting to a further auxiliary electrical circuit. The further auxiliary busbar group may comprise a first busbar 44 connected to the main busbar group at electrical junction 45. The further auxiliary busbar group may comprises a second busbar 43 connected to the main busbar group at electrical junction 47.

Each of the busbars 42, 44 is connected to a relay 54, 56 respectively. Furthermore, the junction box may comprise a number of fuses (e.g. a fuse 72 connected to the first busbar 22 of the front drive busbar group), current sensors, and other.

In the depicted example, the cross-section of the main busbar group may be around 180 mm², and the cross-section of the front busbar group may be around 60 mm². The cross-section of the busbars of the rear busbar group may be e.g. around 120 mm², and the cross-section of the auxiliary busbar group may be around 140 mm². As mentioned before, the cross-section of the busbars may be determined by the level of current they are configured to conduct. It should be clear that in other examples, the different busbar groups may be made of different materials, or the currents may be differently distributed between different busbar groups, which may lead to different cross-sections. The current that circulates through the main busbar group may be over 400A and the voltage may be over 300 volts. In particular, the current may be within the range of 400-1600A and the voltage may be of between 300-1200V. Further, current that circulates through the front drive busbar group may be within the range of 25-40% of the current that circulates through the main busbar group. In particular, current that circulates through the front drive busbar group may be approximately 33% of the current that circulates through the main busbar group.

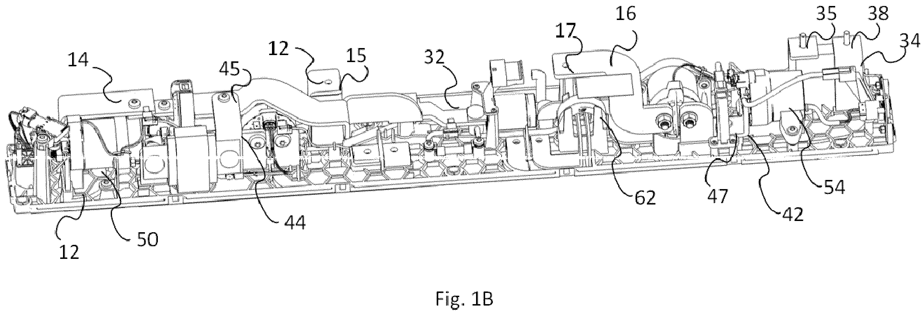

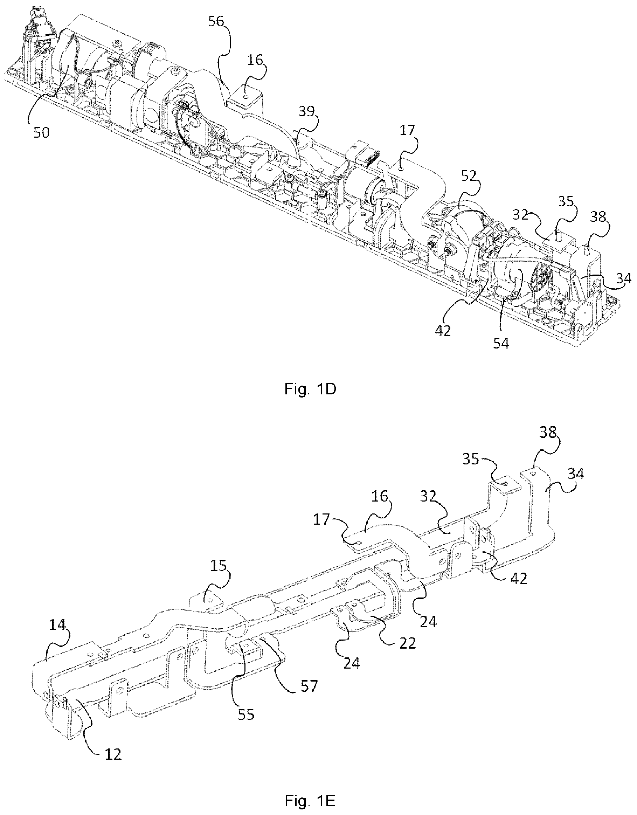

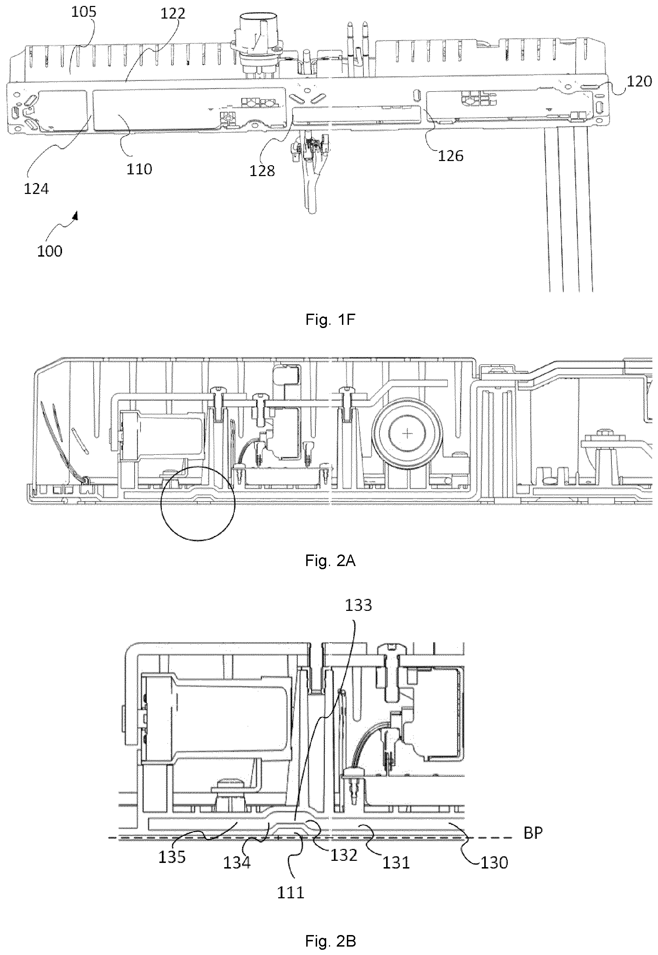

Figures 1B - 1D schematically illustrate different perspective views of the junction box according to the example. Figure 1E schematically illustrates the arrangement of the busbars of the junction box according to the example. Figure 1F shows a bottom view of the junction box. With reference to these figures, a first aspect of the present disclosure relates to a junction box for a vehicle. The junction box comprises a plurality of busbars 12, 14, 16 (and others) and a housing to substantially enclose the plurality of busbars.

A bottom view of the housing may be seen in figure 1F. The housing 100 comprises a base 110, a plurality of sidewalls 105 and a cover (not shown). The base 110 is made of an electrically insulating material. In this example, the shape of the base and cover is substantially rectangular, and four sidewalls connecting the base 110 to the cover are provided.

A portion of at least one of the plurality of busbars is embedded within the base 110. E.g. a portion of first busbar 12 of the main busbar group is embedded in the base in this example. Also busbars 42, 44 of the auxiliary busbar group, and busbar 32 of the rear drive busbar group are largely embedded in the base in this example.

The base of the junction box may be made by injection molding of a resin or molten plastic. Other parts of the housing may also be made in the same injection molding process. In examples, the base (and other parts of the housing) may be made from one or more of polybutylene (PBT), polyamide (PA), polyester, polyketone, a liquid crystal polymer, polyolefin, polyphenylene sulfide (PPS), polyether ether ketone (PEEK), polyphenylene oxide (PPO), polyethersulfone (PES), polyetherimide (PEI), and polyimide or a mixture or copolymer of one or more of these. By embedding the busbars in the base, they are electrically insulated. At the same time, heat generated by conducting current in the busbars may be dissipated through the material of the base.

In order to improve the heat conducting capacity of the base, the material of the base may comprises one or more heat dissipation fillers. In examples, the heat dissipation fillers may be selected from the group of: magnesium oxide, titanium dioxide, aluminum nitride, silicon nitride, boron nitride, aluminum oxide, silica, zinc oxide, barium titanate, strontium titanate, beryllium oxide, silicon carbide, and manganese oxide.

The base of the junction box may have a cooling side configured to be in heat exchanging contact with a cooling means or cold source. The cooling means may be e.g. a cold plate cooled by a cold liquid, e.g. cold water. In examples, the cooling of the housing of the junction box may be provided by the cooling system of the main battery.

In the shown example, a common mode filter is arranged in the junction box. The common mode filter in the illustrated comprises a ferrite ring, and wherein the ferrite ring is arranged around one or more of the busbars.

In a second aspect of the present disclosure, a method for manufacturing a junction box for a vehicle is provided. The method comprises positioning a first group of busbars in a mold. The first groups of busbars may include busbars 12, and 16 of the main busbar group, busbars 12 and 14 of the auxiliary busbar group, and busbars 32 and 34 of the rear drive busbar group.

The method comprises injection molding of a base 100 of the junction box, such that at least a portion of each of the busbars of the first group is embedded in the base 100. The method further comprises providing a second busbar, e.g. busbars 22, 24 of the front drive busbar group and arranging a ferrite core 62 around the second busbar 22, 24. Then the second busbar 22, 24 with the ferrite core 62 may be mounted to the base.

With the method according to this aspect, a relatively cheap manufacturing method is provided. The ferrite core 62 does not need to be split into separate parts for assembly. Rather, because the corresponding busbars are not embedded in the injection molding process, a complete ring can be assembled around them.

In the shown example, only a single ferrite ring (or other common mode filter) is used. In the shown example, the ferrite ring is only provided inside the junction box for the front drive busbar group as mentioned before. But in examples, wherein a plurality of such filters are used, similar manufacturing steps may be used for the other busbars around which a filter is to be arranged, e.g. the busbars of the rear drive busbar group.

The junction box further comprises a support frame 120 to support the base 110. The support frame may be more rigid than the base of the junction box and thus provide stiffness to the structure. The support frame may also be used to connect the junction box to a component of the vehicle, such as e.g. the battery pack of the vehicle. A metallic support frame, e.g. made of steel may be used which may be welded to a component of the vehicle to securely fasten the junction box.

The support frame may comprise a perimetral flange 122 surrounding at least a part of a perimeter of the base 110. The support frame 120 may further comprise one or more transverse braces 124, 126, 128 connecting parts of the perimetral flange 122 on opposite sides of the base 110. The braces may be arranged in grooves of the base 110.

Even though in the depicted example, the braces 124, 126, 128 are arranged in a transverse direction, substantially perpendicular to a longitudinal direction of the junction box, in other examples, the braces may deviate from the transverse direction.

Figures 2A and 2B schematically illustrate examples of details of a base of a junction box according to an example. In these examples, at least one of the busbars embedded within the base extends over one or more of the grooves of the base. Figure 2B provides a more detailed view of a part of the junction box indicated in figure 2A.

As may be seen in figure 2B, the busbar 130 embedded in the base is arranged to "jump" over the groove 111 in the base. The groove 111 in this example may fit a brace, such as brace 124 of the example of figure 1 and may extend from one longitudinal side of the base to the opposite longitudinal side of the base. The groove 111 in this example is arranged perpendicular to the busbar 130.

The busbar 130 in this example may be e.g. the first or the second main busbars illustrated in figure 1. As commented before, the main busbars are generally configured to conduct higher levels of current than other busbars. For this reason, they may have a larger cross-section than other busbars and also require more cooling than other busbars and thus preferably be embedded in the base.

A depth of the groove 111 may be adjusted to the height of the brace, and in particular the depth of the groove may substantially correspond to or be slightly larger than the height of the corresponding brace. For this reason, the depth of the groove may be larger than a distance between the outer side of the base and the busbar 130. The busbar 130 may for this reason not be completely straight if it extends over the groove 111.

A portion of the busbar 130 that is embedded in the base extends over the groove 111 while remaining embedded in the base in this example. The busbar 130 is not entirely straight but includes a portion that may have been bent or folded to adjust for the groove 111.

The busbar 130 in this example comprises a first segment 131 that is substantially parallel to the base plane BP and is arranged on one side of groove 111. The embedded portion of the busbar 130 also includes a second segment 135 which is substantially parallel to the base plane BP and arranged on the other side of groove 111. The first and second segments 131, 135 may lie in the same plane.

The portion of the busbar 130 embedded in the base further comprises further segments between the first 131 and second segments 135 which are not parallel to the base plane.

In this particular example, the further segments include inclined segment 132 connected to first segment 131 and inclined segment 134 connected to the second segment 135. Also in this example, a further straight segment 133 connects inclined segments 132, 134. Segment(s) 133 connecting the inclined segments 132, 134 to each other may be arranged substantially between the groove 111 and the inner side of the base.

The segments of the busbar that extend over the groove are generally closer to an inner side of the busbar than other portions of the busbar. A thickness of the material between the segments of the busbar arranged at or near the groove and an outer side of the base may have a thickness of at least 0.5 mm, specifically at least 1mm, and more specifically 1 - 2.5 mm.

The inclined segments 132, 134 may generally be arranged at or near the corresponding groove(s). For cooling purposes it may be beneficial for the busbars to be embedded as close as possible to the outer side of the base. Arranging the inclined segments 132, 134 relatively close to the groove may be beneficial for this purpose as well.

In further non-illustrated examples, instead of straight inclined segments 132, 134, such segments may be curved. A further straight segment 133 may connect such curved segments, however in other examples, the segment 133 connecting such segments need not be straight and may even be dispensed with.

A cooling system including a cooling surface (i.e. a surface that is configured to be in contact with an element to be cooled) may be provided. The cooling surface may be a surface of a plate or plate-like element of the cooling system. The support frame of the junction box may be attached e.g. through welding to the cooling surface. Since the base of the junction box and the support frame are adapted to each other, e.g. they may have complementary shapes that mate with each other, the base of the junction box in which one or more portions of the busbars may be embedded is aligned with the cooling surface of the cooling system. Effective cooling of the busbars can thus be ensured. The support frame itself may be cooled directly by the cooling surface as well and thus help in the heat dissipation of the busbars, and particularly those embedded in the base.

The base may have a cooling side configured to be in heat exchanging contact with a suitable cooling means, for example the aforementioned cooling surface. The cooling surface in the example of figure 2B may be a cooling surface of a cooling circuit for the main battery. The cooling surface itself may be cooled e.g. by liquid running through channels with the cooling system.

Other cooling systems may alternatively be used for cooling the junction box. In a specific example, a separate dedicated cooling system for the junction box might be used.

In yet further examples, the aforementioned support frame may be part of the cooling system. The support frame may be integrally formed with the cooling surface of the cooling system for example.

The base may include areas in between the braces and the perimetral flange, where particularly effective thermal contact may be established. I.e. a cold plate or other heat dissipation element may be arranged in direct conductive contact with these areas of the base.

According to a specific example, the method for manufacturing a junction box for a vehicle comprises:
- positioning a first group of busbars in a mold;
- injection molding of a base of the junction box, such that at least a portion of each of the busbars of the first group is embedded in the base;
- providing a second busbar;
- arranging a ferrite core around the second busbar;
- fixing, particularly by clipping, a ferrite core to a portion of the housing;
- mounting the second busbar such that, in use, the second busbar is electrically connected to a fuse and/or a relay electrically connected to the first group;
- fitting part of the support frame in grooves in the base;
- connecting the first group of busbars to the electrodes of the main battery of the vehicle;
- connecting the second busbar to a rear inverter for driving a rear motor of the vehicle and/or to a front inverter for driving a front motor of the vehicle; and
- attaching, particularly by welding, the support frame to a component of the vehicle (e.g. the cooling system) to securely fasten the junction box.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow.

## Claims

1. A junction box for a vehicle comprising:
a plurality of busbars (12, 14, 16, 32, 34; 130), and
a housing (100) to substantially enclose the plurality of busbars, wherein
the housing (100) comprises a base (110), a cover and one or more sidewalls (105) connecting the base (110) with the cover, and wherein
the base (110) is made of an electrically insulating material and comprises an inner side facing an inside of the junction box, and an outer side facing an outside of the junction box, wherein
a portion of at least one of the plurality of busbars is embedded within the base, wherein
the base (110) includes one or more grooves (111) at the outer side, wherein
a portion of at least one of the busbars that is embedded within the base extends over one or more of the grooves (111), and
wherein the junction box further comprises a support frame (120) to support the base (110), wherein the support frame (120) is partially arranged in one or more grooves (111) of the base (110).

2. The junction box according to claim 1, wherein the base (110) substantially extends along a base plane, and wherein the portion of the busbar (130) extending over one or more of the grooves (111) comprises
a first segment (131) extending substantially parallel to the base plane on a first side of the groove;
a second segment (135) extending substantially parallel to the base plane on a second side of the groove; and
one or more further segments (132, 134) between the first (131) and second (135) segments which are not parallel to the base plane.

3. The junction box according to claim 2, wherein at least one of the further segments (132, 134) is arranged at or near the groove (111).

4. The junction box according to any of claims 1 - 3, wherein the outer side of the base (110) is configured to be cooled.

5. The junction box according to any of claims 1 - 4, wherein a thickness of the base between the outer side and the portion of the busbars embedded within the base is at least 1 mm, and specifically between 1 and 2.5 mm.

6. The junction box according to any of claims 1 - 5, wherein the support frame further includes a perimetral flange (122) surrounding at least a part of a perimeter of the base (110), and one or more braces (124, 126, 128) to connect parts of the perimetral flange (122).

7. The junction box according to any of claims 1 - 6, wherein the plurality of busbars includes:
(i) a main busbar group including a first main busbar (12) connected to a first electrode of the main battery of the vehicle, and a second main busbar (16) connected to a second electrode of the main battery of the vehicles; and
(ii) a rear drive busbar group for connecting to a rear inverter for driving a rear motor of the vehicle; and/or a front drive busbar group for connecting to a front inverter for driving a front motor of the vehicle.

8. The junction box according to claim 7, wherein the first (12) and/or the second (16) main busbar is at least partially embedded in the base (110), and wherein the rear drive busbar group and/or the front drive busbar group are not embedded in the base (110).

9. The junction box according to claim 7 or 8, further comprising a common mode filter, wherein
the common mode filter comprises a ferrite core, and wherein the ferrite core is arranged around one or more portions of the rear and/or front drive busbar group, and optionally wherein the ferrite core is a one-piece ferrite core.

10. The junction box according to claim 9, wherein the main busbar group is electrically connected to a fuse and/or a relay (50, 52), and wherein the rear drive busbar group and/or the front drive busbar group are electrically connected to the fuse and/or relay that are electrically connected to the main busbar group.

11. A system comprising the junction box according to any of claims 1 - 10, and a cooling system comprising a cooling surface, and wherein the cooling surface is attached to the outer side of the junction box.

12. A method for manufacturing a junction box for a vehicle according to any of claims 1 - 11, the method comprising:
positioning a first group of busbars (12, 14, 16, 32, 34) in a mold;
injection molding of a base (110) of the junction box, such that at least a portion of each of the busbars (12, 14, 16, 32, 34) of the first group is embedded in the base (110);
providing a second busbar (22, 24);
arranging a ferrite core (62) around the second busbar (22, 24); and
mounting the second busbar (22, 24) with the ferrite core (62) to the base (110), and further comprising joining a support frame (120) to the base (110) of the junction box, including fitting part of the support frame (120) in grooves in the base (110).

## Patentansprüche

1. Anschlussdose für ein Fahrzeug, umfassend:
eine Vielzahl von Stromschienen (12, 14, 16, 32, 34; 130) und
ein Gehäuse (100), um die Vielzahl von Stromschienen im Wesentlichen zu umschließen, wobei
das Gehäuse (100) eine Basis (110), eine Abdeckung und eine oder mehrere Seitenwände (105) umfasst, die die Basis (110) mit der Abdeckung verbinden, wobei
die Basis (110) aus einem elektrisch isolierenden Material besteht und eine Innenseite, die einem Inneren der Anschlussdose zugewandt ist, und eine Außenseite umfasst, die einem Äußeren der Anschlussdose zugewandt ist, wobei
ein Abschnitt mindestens einer der Vielzahl von Stromschienen in die Basis eingebettet ist, wobei
die Basis (110) an der Außenseite eine oder mehrere Nuten (111) einschließt, wobei
ein Abschnitt mindestens einer der in die Basis eingebetteten Stromschienen sich über eine oder mehrere der Nuten (111) erstreckt, und
wobei die Anschlussdose ferner einen Stützrahmen (120) zum Stützen der Basis (110) umfasst, wobei der Stützrahmen (120) teilweise in einer oder mehreren Nuten (111) der Basis (110) angeordnet ist.

2. Anschlussdose nach Anspruch 1, wobei sich die Basis (110) im Wesentlichen entlang einer Grundebene erstreckt und wobei der Abschnitt der Stromschiene (130), der sich über eine oder mehrere der Nuten (111) erstreckt, umfasst
ein erstes Segment (131), das sich im Wesentlichen parallel zu der Grundebene auf einer ersten Seite der Nut erstreckt;
ein zweites Segment (135), das sich im Wesentlichen parallel zu der Grundebene auf einer zweiten Seite der Nut erstreckt; und
ein oder mehrere weitere Segmente (132, 134) zwischen dem ersten (131) und dem zweiten (135) Segment, die nicht parallel zu der Grundebene verlaufen.

3. Anschlussdose nach Anspruch 2, wobei mindestens eines der weiteren Segmente (132, 134) an oder in der Nähe der Nut (111) angeordnet ist.

4. Anschlussdose nach einem der Ansprüche 1-3, wobei die Außenseite der Basis (110) dazu ausgelegt ist, gekühlt zu werden.

5. Anschlussdose nach einem der Ansprüche 1-4, wobei eine Dicke der Basis zwischen der Außenseite und dem in der Basis eingebetteten Abschnitt der Stromschienen mindestens 1 mm und insbesondere zwischen 1 und 2,5 mm beträgt.

6. Anschlussdose nach einem der Ansprüche 1-5, wobei der Stützrahmen ferner einen Umfangsflansch (122), der mindestens einen Teil eines Umfangs der Basis (110) umgibt, und eine oder mehrere Verstärkungen (124, 126, 128) zum Verbinden von Teilen des Umfangsflansches (122) einschließt.

7. Anschlussdose nach einem der Ansprüche 1-6, wobei die Vielzahl von Stromschienen umfasst:
(i) eine Hauptstromschienengruppe, die eine erste Hauptstromschiene (12), die mit einer ersten Elektrode der Hauptbatterie des Fahrzeugs verbunden ist, und eine zweite Hauptstromschiene (16) einschließt, die mit einer zweiten Elektrode der Hauptbatterie der Fahrzeuge verbunden ist; und
(ii) eine Heckantriebsstromschienengruppe zum Verbinden mit einem hinteren Wechselrichter zum Antreiben eines Heckmotors des Fahrzeugs; und/oder eine Frontantriebsstromschienengruppe zum Verbinden mit einem vorderen Wechselrichter zum Antreiben eines Frontmotors des Fahrzeugs.

8. Anschlussdose nach Anspruch 7, wobei die erste (12) und/oder die zweite (16) Hauptstromschiene mindestens teilweise in der Basis (110) eingebettet ist und wobei die Heckantriebsstromschienengruppe und/oder die Frontantriebsstromschienengruppe nicht in der Basis (110) eingebettet sind.

9. Anschlussdose nach Anspruch 7 oder 8, ferner umfassend einen Gleichtaktfilter, wobei
der Gleichtaktfilter einen Ferritkern umfasst, und wobei der Ferritkern um einen oder mehrere Abschnitte der Heck- und/oder Frontantriebsstromschienengruppe angeordnet ist und wobei der Ferritkern optional ein einteiliger Ferritkern ist.

10. Anschlussdose nach Anspruch 9, wobei die Hauptstromschienengruppe elektrisch mit einer Sicherung und/oder einem Relais (50, 52) verbunden ist und wobei die Heckantriebsstromschienengruppe und/oder die Frontantriebsstromschienengruppe elektrisch mit der Sicherung und/oder dem Relais verbunden sind, die elektrisch mit der Hauptstromschienengruppe verbunden sind.

11. System, das die Anschlussdose nach einem der Ansprüche 1-10 und ein Kühlsystem mit einer Kühlfläche umfasst, wobei die Kühlfläche an der Außenseite der Anschlussdose angebracht ist.

12. Verfahren zur Herstellung einer Anschlussdose für ein Fahrzeug nach einem der Ansprüche 1-11, wobei das Verfahren umfasst:
Positionieren einer ersten Gruppe von Stromschienen (12, 14, 16, 32, 34) in einer Form;
Spritzgießen einer Basis (110) der Anschlussdose, sodass mindestens ein Abschnitt jeder der Stromschienen (12, 14, 16, 32, 34) der ersten Gruppe in der Basis (110) eingebettet ist;
Bereitstellen einer zweiten Stromschiene (22, 24);
Anordnen eines Ferritkerns (62) um die zweite Stromschiene (22, 24) herum; und
Montieren der zweiten Stromschiene (22, 24) mit dem Ferritkern (62) an der Basis (110), und ferner umfassend das Anbringen eines Stützrahmens (120) an der Basis (110) der Anschlussdose, wobei ein Teil des Stützrahmens (120) in Nuten in der Basis (110) eingepasst wird.

## Revendications

1. Boîtier de raccordement pour véhicule comprenant :
une pluralité de barres omnibus (12, 14, 16, 32, 34 ; 130), et
un boîtier (100) destiné à envelopper sensiblement la pluralité de barres omnibus, dans lequel
le boîtier (100) comprend une base (110), un couvercle et une ou plusieurs parois latérales (105) reliant la base (110) au couvercle, et dans lequel
la base (110) est constituée d'un matériau électriquement isolant et comprend une face intérieure tournée vers un intérieur du boîtier de raccordement et une face extérieure tournée vers un extérieur du boîtier de raccordement, dans lequel
une portion d'au moins une barre omnibus parmi la pluralité de barres omnibus est incorporée dans la base, dans lequel
la base (110) comprend une ou plusieurs rainures (111) sur sa face extérieure, dans lequel
une portion d'au moins une des barres omnibus incorporées dans la base s'étend sur une ou plusieurs des rainures (111), et
dans lequel le boîtier de raccordement comprend en outre un cadre de support (120) destiné à supporter la base (110), dans lequel le cadre de support (120) est partiellement agencé dans une ou plusieurs rainures (111) de la base (110).

2. Boîtier de raccordement selon la revendication 1, dans lequel la base (110) s'étend sensiblement le long d'un plan de base, et dans lequel la portion de la barre omnibus (130) s'étendant au-dessus d'une ou plusieurs des rainures (111) comprend
un premier segment (131) s'étendant sensiblement parallèlement au plan de base sur un premier côté de la rainure ;
un second segment (135) s'étendant sensiblement parallèlement au plan de base sur un second côté de la rainure ; et
un ou plusieurs segments (132, 134) supplémentaires entre le premier (131) et le second (135) segment qui ne sont pas parallèles au plan de base.

3. Boîtier de raccordement selon la revendication 2, dans lequel au moins un des segments (132, 134) supplémentaires est agencé au niveau ou à proximité de la rainure (111).

4. Boîtier de raccordement selon l'une quelconque des revendications 1 à 3, dans lequel la face extérieure de la base (110) est conçue pour être refroidie.

5. Boîtier de raccordement selon l'une quelconque des revendications 1 à 4, dans lequel l'épaisseur de la base entre la face extérieure et la portion des barres omnibus incorporées dans la base est d'au moins 1 mm, et plus précisément comprise entre 1 mm et 2,5 mm.

6. Boîtier de raccordement selon l'une quelconque des revendications 1 à 5, dans lequel le cadre de support comprend en outre une bride périmétrale (122) entourant au moins une partie d'un périmètre de la base (110), et un ou plusieurs renforts (124, 126, 128) pour relier des parties de la bride périmétrale (122).

7. Boîtier de raccordement selon l'une quelconque des revendications 1 à 6, dans lequel la pluralité de barres omnibus comprend :
(i) un groupe de barres omnibus principales comprenant une première barre omnibus (12) principale reliée à une première électrode de la batterie principale du véhicule, et une seconde barre omnibus (16) principale reliée à une seconde électrode de la batterie principale des véhicules ; et
(ii) un groupe de barres omnibus d'entraînement arrière pour la liaison à un inverseur arrière destiné à entraîner un moteur arrière du véhicule ; et/ou un groupe de barres omnibus d'entraînement avant pour la liaison à un inverseur avant destiné à entraîner un moteur avant du véhicule.

8. Boîtier de raccordement selon la revendication 7, dans lequel la première (12) et/ou la seconde (16) barre omnibus principale est au moins partiellement incorporée dans la base (110), et dans lequel le groupe de barres omnibus d'entraînement arrière et/ou le groupe de barres omnibus d'entraînement avant ne sont pas incorporés dans la base (110).

9. Boîtier de raccordement selon la revendication 7 ou 8, comprenant en outre un filtre de mode commun, dans lequel
le filtre de mode commun comprend un noyau de ferrite, et dans lequel le noyau de ferrite est agencé autour d'une ou plusieurs portions du groupe de barres omnibus d'entraînement arrière et/ou avant, et en option dans lequel le noyau de ferrite est un noyau de ferrite monobloc.

10. Boîtier de raccordement selon la revendication 9, dans lequel le groupe de barres omnibus principales est raccordé électriquement à un fusible et/ou à un relais (50, 52), et dans lequel le groupe de barres omnibus d'entraînement arrière et/ou le groupe de barres omnibus d'entraînement avant sont raccordés électriquement au fusible et/ou au relais qui sont raccordés électriquement au groupe de barres omnibus principales.

11. Système comprenant le boîtier de raccordement selon l'une quelconque des revendications 1 à 10, et système de refroidissement comprenant une surface de refroidissement, et dans lequel la surface de refroidissement est fixée à la face extérieure du boîtier de raccordement.

12. Procédé de fabrication d'un boîtier de raccordement pour un véhicule selon l'une quelconque des revendications 1 à 11, le procédé comprenant :
le positionnement d'un premier groupe de barres omnibus (12, 14, 16, 32, 34) dans un moule ;
le moulage par injection d'une base (110) du boîtier de raccordement, de sorte qu'au moins une portion de chacune des barres omnibus (12, 14, 16, 32, 34) du premier groupe soit incorporée dans la base (110) ;
la fourniture d'une seconde barre omnibus (22, 24) ;
l'agencement d'un noyau de ferrite (62) autour de la seconde barre omnibus (22, 24) ; et
le montage de la seconde barre omnibus (22, 24) avec le noyau de ferrite (62) sur la base (110), et comprenant en outre le raccordement d'un cadre de support (120) à la base (110) du boîtier de raccordement, y compris l'insertion d'une partie du cadre de support (120) dans des rainures de la base (110).
